# NOUVEAU FASCICULE DE BREVET EUROPEEN

(11) **EP 0 498 689 B2**
(45) Date de publication et mention de la décision concernant l'opposition: **20.08.2003**
(45) Mention de la délivrance du brevet: 17.09.1997
(21) Numéro de dépôt: 92400181.1
(22) Date de dépôt: 24.01.1992
(51) Int. Cl.: C09K 11/81, C01B 25/45

(54) **Phosphate mixte de lanthane, terbium et cerium, procédé de fabrication de celui-ci**
Lanthan-Terbium-und-Cerphosphat-Gemisch, Verfahren zu seiner Herstellung
Mixed lanthanum terbium and cerium phosphate, process for its preparation

(30) Priorité: 04.02.1991 FR 9101215
(43) Date de publication de la demande: 12.08.1992
(73) Titulaire: RHODIA CHIMIE, 92408 Courbevoie Cédex (FR)
(72) Inventeur: Collin, Marie-Pierre, F-93800 Epinay/Seine (FR); Le Govic, Anne-Marie, F-75010 Paris (FR); Huguenin, Denis, F-92300 Levallois (FR)
(74) Mandataire: Dubruc, Philippe

(56) Documents cités:
- GB-A- 1 214 257
- JP-A- 1 041 673
- PATENT ABSTRACTS OF JAPAN vol. 6, no. 94 (C-105)(972) 2 Juin 1982
- PATENT ABSTRACTS OF JAPAN vol. 12, no. 82 (C-481)(2929) 15 Mars 1988
- PATENT ABSTRACTS OF JAPAN vol. 9, no. 233 (C-304)(1956) 19 Septembre 1985
- Journal of Electron Spectroscopy and Related Phenomena, vol. 21, 17-30, 1980
- ASTM STP 643, N. McIntyre, ed. 83-104, 1978
- J. Inorg. Nucl. Chem., vol. 5, 133-140, 1957
- Shin Zikken Kagaku Koza "New Experimental Chemistry Series", vol. 8, Synthesis of Inorganic Compounds, (II), p. 694, 1977
- Koubutsu Gakkaishi, Journal of Mineralogy, Japan, vol. 19, no. 3, p. 118, novembre 1989

## Description

La présente invention concerne les phosphates mixte de terres rares utiles notamment pour la fabrication de luminophore.

Elle se rapporte plus particulièrement à un phosphate mixte de lanthane, cérium et terbium utile notamment comme précurseur de luminophore vert et un procédé de fabrication de celui-ci.

Dés 1970, il a été découvert que des phosphates mixtes de terres rares et notamment de lanthane, cérium et terbium présentent une propriété de luminescence intéressante. Ainsi, il a été développé de nombreux phosphates de lanthane, cérium, terbium, appelés également "phosphates de LaCeTb" avec différentes concentrations en lanthane, cérium et terbium, et des procédés de fabrication de ceux-ci.

Il a également été proposé des procédés de fabrication de ceux-ci qui peuvent être classés en deux grandes catégories :
- procédés par "voie sèche"
- et procédés par "voie humide".

Les procédés par voie sèche, notamment décrit dans les brevets **JP 62007785, WO 8204438, JP 62089790, JP 59179578, JP 62000579** consistent à former un mélange des oxydes de terres rares ou à prendre un oxyde mixte de terres rares et à réaliser une phosphatation de ce mélange ou oxyde mixte par calcination en présence de phosphate diammonique.

Les procédés par "voie humide" notamment décrits dans les brevets **JP 57023674, JP 60090287 et JP 62218477** consistent en une synthèse directe d'un phosphate mixte des terres rares ou d'un mélange des phosphates de terres rares par attaque d'un composé solide (carbonate, oxyde) par H₃PO₄ pour précipiter les phosphates.

Le brevet américain 3507804 décrit un procédé de fabrication de phosphate double lanthane terbium par précipitation du phosphate à partir d'une solution de nitrates de terres rares et addition d'acide phosphorique. Toutefois, le ou les phosphates obtenus sont très difficiles à filtrer.

Ces différents procédés conduisent à des phosphates mixtes nécessitant, pour leur application en luminescence, un traitement thermique à haute température, environ 1200°C, sous atmosphère réductrice. En effet, pour que le phosphate de LaCeTb soit un luminophore vert, il faut que le cérium et le terbium soient à l'état d'oxydation 3+.

En outre, il est nécessaire que le rendement de la phosphatation soit proche de 100 % pour obtenir un luminophore le plus pur possible et pour obtenir une efficacité maximale d'émission, ce qui requiert de nombreuses précautions et un traitement relativement long dans le cas des procédés par "voie sèche".

L'invention a notamment pour but de remédier à ces inconvénients en proposant un phosphate mixte de terres rares (lanthane, cérium, terbium) qui peut être transformé en luminophore vert par calcination à haute température sous atmosphère non réductrice, et un procédé de fabrication de ce phosphate mixte par voie humide conduisant à un phosphate mixte de terres rares à pureté élevée.

A cet effet, l'invention propose un phosphate mixte de lanthane cérium terbium de formule générale :

LaₓCe_{y}Tb_{(1-x-y)}PO₄ (1)

dans laquelle x est compris entre 0,4 et 0,6 et x + y est supérieur à 0,8, caractérisé en ce que, après calcination à une température comprise entre 700°C et 900°C pendant 8 heures sous air, il présente des coordonnées L* supérieures à 98 et des coordonnées a* et b* comprises entre - 0,5 et 0,5 dans le système CIE 1976 (L*, a*, b*) selon la norme AFNOR X08-012.

Ce phosphate se caractérise en ce qu'il présente une concentration en cérium IV et terbium IV très faible après calcination à une température supérieure à 500°C, sous air.

Cette faible proportion est démontrée par un test de colorimétrie consistant à déterminer les coordonnées caractéristiques de la couleur du corps dans le système CIE 1976 (L*, a*, b*) définis par la Commission Internationale d'Eclairage, et répertorié dans le Recueil de normes française (AFNOR) couleur colorimétrique n° X08-012 (1983). Ces coordonnées sont déterminées au moyen d'un colorimétre commercialisé par la Société Pacific Scientific.

Ainsi, les phosphates de LaCeTb de l'invention présentent après calcination à 700°C sous air, une clarté, représentée par la coordonnée L*, supérieure à 98 et avantageusement comprise entre 99 et 99,9

Cette coordonnée L* permet de mesurer la couleur blanche du produit qui est directement reliée à la présence d'espèces colorées dans le produit tels que du cérium et/ou terbium à l'état d'oxydation 4+.

Les produits de l'invention présentent également des coordonnés de couleur A*, b* comprises entre -0,5 et 0,5 environ, de préférence entre - 0,25 et 0,50.

Ces valeurs excellentes de clarté L*, a*, b* sont obtenus également pour des températures de calcination comprises entre 700° et 900°C. Ceci montre une exceptionnelle stabilité du composé de l'invention en atmosphère non réductrice.

Il est également possible d'apprécier la présence ou l'absence du cérium et/ou terbium à l'état d'oxydation 4+, par une analyse de surface des produits par la technique X.P.S. décrite, notamment, dans la publication PRALINE et COLL. Journal of Electron Spectroscopy and related phenomena, 21 (1980) P. 17 à 30 et 31 à 46.

Ainsi, les produits de l'invention présentent, dans la gamme d'énergie correspondant aux électrons 3D du Cérium, deux doublets caractéristiques de l'état d'oxydation 3+ et l'absence de satellite, situé à 32,7 V du premier pic, caractéristique d'un degré d'oxydation 4+.

Le phosphate mixte de l'invention présente des atomes de cérium et terbium stabilisés à l'état d'oxydation 3+, permettant d'utiliser lors de la calcination une atmosphère quelconque. Comme, le cérium et le terbium se trouvent à l'état 3+, le phosphate mixte de l'invention permettra d'obtenir des luminophores verts, à propriété de luminescence élevée.

Par ailleurs, l'invention a également pour objet un phosphate mixte de lanthane, cérium, terbium de formule générale (I) décrite ci-dessus, pouvant contenir avant calcination à une température supérieure à 500°C au plus 5 % en poids d'ions ammonium, avantageusement inférieur à 2 %.

Ces ions ammonium sont éliminés par décomposition thermique ou évaporation, au cours de la calcination du produit.

Les phosphates mixtes de l'invention présente une surface spécifique supérieure à 50 m²/g après traitement thermique à une température inférieure à 300°C.

Cette surface spécifique, mesurée par la méthode dite B.E.T. qui est déterminée par adsorption d'azote conformément à la norme ASTM D3663-78 établie à partir de la méthode BRUNAUER-EMMETT-TELLER décrite dans la périodique "The Journal of American Society" 60,309 (1938), est avantageusement comprise entre 50 m²/g et 100 m²/g.

Le phosphate mixte de l'invention peut également comprendre des additifs comme d'autres terres rares ou éléments métalliques.

L'invention a également pour objet un procédé de fabrication des phosphates mixtes de lanthane, cérium et terbium décrits ci-dessus.

Selon une première variante, ce procédé est caractérisé en ce qu'il consiste à mélanger une solution de sels solubles de lanthane, cérium et terbium avec des ions phosphates avec contrôle du pH du milieu de précipitation à une valeur supérieure ou égale à 2, et comprise entre 2 et 6, à maintenir le précipité dans le milieu de précipitation pendant une durée comprise entre 15 minutes et 10 heures après la fin du mélange, puis à filtrer et laver le précipité et éventuellement le sécher, le contrôle du pH du milieu de précipitation étant réalisé par addition d'un composé basique, le composé basique et la solution de sels solubles de terres rares étant ajoutés simultanément dans la solution contenant des ions phosphates.

Selon une seconde variante, ce procédé est caractérisé en ce qu'il consiste à mélanger une solution de sels solubles de lanthane, cérium et terbium avec des ions phosphates, avec contrôle du pH du milieu de précipitation à une valeur supérieure à 6, le contrôle du pH du milieu de précipitation étant réalisé par addition d'un composé basique, les ions phosphates et le composé basique étant ajoutés simultanément dans la solution de sels solubles de terres rares.

Le phosphate mixte obtenu selon ces deux variantes peut contenir des groupements ammonium absorbés. Ce phosphate mixte peut être ensuite calciné à une température supérieure à 500°C et sous une atmosphère quelconque pour donner le composé de formule générale (I).

Selon l'invention, le précipité est maintenu dans le milieu de précipitation, après la fin du mélange, pendant une durée comprise entre 15mn environ et 10 heures environ, quand le pH du milieu de précipitation est compris entre 2 et 6 environ. Ce maintien généralement appelé "Mûrissement" permet un réarrangement des espèces précipitées. Ainsi, le produit obtenu est filtrable.

Bien que le précipité obtenu quand le pH du milieu de précipitation est contrôlé à une valeur supérieure à 6, soit filtrable, cette filtrabilité peut être améliorée par un mûrissement du précipité équivalent à celui mis en oeuvre quand le pH du milieu de précipitation est compris entre 2 et 6.

Cette étape de mûrissement peut être réalisée à une température quelconque, par exemple à une température comprise entre 15°C et 100°C, avantageusement à la température de précipitation, avec de préférence une agitation. Le pH du milieu peut être contrôlé ou on peut le laisser évoluer librement.

Par "pH contrôlé", on entend un maintien du pH à une certaine valeur, par addition de composés basiques ou acides ou d'une solution tampon. Le pH du milieu variera ainsi d'environ une unité pH autour de la valeur de consigne fixée.

Dans la présente invention, ce contrôle du pH est avantageusement réalisé par addition d'un composé basique comme cela sera expliqué ci-dessous.

Le produit filtré peut être notamment séché par des procédés mettant en oeuvre une pulvérisation et séchage des gouttes, telle que la technique d'atomisation. Ainsi, il est possible d'obtenir un produit présentant des grains de diamètre moyen avantageusement compris entre 1 µm et 10 µm environ avec une répartition granulométrique resserrée.

Ainsi, le procédé de synthèse de phosphate mixte de l'invention permet de réaliser la calcination de ce produit sous atmosphère quelconque, c'est à dire sous atmosphère réductrice ou non réductrice, et même oxydante. Le produit calciné obtenu contiendra du cérium et du terbium à l'état d'oxydation 3+, le cérium et le terbium à l'état d'oxydation 4+ n'étant présents qu'à l'état de traces, ou totalement absents.

La solution de sels de lanthane, terbium et cérium peut comprendre d'autres sels métalliques comme par exemple des sels d'autres terres rares, pour obtenir des phosphates de LaCeTb dopés avec d'autres éléments.

Le contrôle du pH du milieu de précipitation est réalisé par l'addition d'un composé basique lors du mélange de la solution des ions terres rares et du composé basique.

Ainsi, si le phosphate est ajouté dans la solution de terres rares, le composé basique est ajouté simultanément avec celui-ci pour contrôler le pH à une valeur supérieure à 2.

De même, quand la solution de composés de terres rares est ajoutée dans une solution de phosphate, le composé basique est ajouté simultanément pour contrôler le pH à une valeur supérieure à 2, et avantageusement constante.

Ce contrôle du pH à une valeur supérieure à 2 et avantageusement comprise entre 2 et 10 permet d'obtenir un précipité de phosphate de LaCeTb, non gélatineux et filtrable, avec ou sans étape de mûrissement, selon le domaine de pH.

La précipitation est réalisée de préférence en milieu aqueux à une température qui n'est pas critique et qui est comprise, avantageusement, entre la température ambiante (15°C - 25°C) et 100°C.

Les concentrations des sels de terres rares ne sont pas critiques. Ainsi, la concentration totale en terres rares exprimée en oxyde de terres rares peut être comprise entre 0,01 mole/l et 2 mole/l.

Les sels de terres rares convenables pour l'invention sont notamment les sels solubles en milieu aqueux comme par exemple, les nitrates, chlorures, acétates, carboxylates, ou un mélange de ceux-ci.

Les ions phosphates mélangés avec la solution de terres rares sont apportés par des composés purs ou en solution comme par exemple, l'acide phosphorique, les phosphates alcalins ou d'autres éléments métalliques donnant avec les anions associés aux terres rares un composé soluble.

Selon un mode de réalisation préféré de l'invention, les ions phosphates sont ajoutés sous forme de phosphate d'ammonium car le cation ammonium se décomposera lors de la calcination permettant ainsi d'obtenir un phosphate mixte de grande pureté.

Parmi les phosphates d'ammonium, le phosphate diammonique ou monoammonique, sont les composés préférés de l'invention.

Les ions phosphates sont ajoutés de manière à obtenir un rapport molaire PO₄^{≡}/TR supérieur à 1 et avantageusement compris entre 1,1 et 3.

Comme composé basique convenable pour l'invention on peut citer, à titre d'exemple, les hydroxydes métalliques ou l'hydroxyde d'ammonium, ou tout autre composé basique dont les espèces le constituant ne formeront aucun précipité lors de l'addition dans le milieu réactionnel, par combinaison avec une des espéces contenues dans ce milieu, et permettant un contrôle du pH du milieu de précipitation.

Selon un mode de réalisation préféré de l'invention, ce composé basique est avantageusement un composé facilement éliminable soit avec la phase liquide du milieu réactionnel et lavage du précipité, soit par décomposition thermique lors de la calcination du phosphate mixte.

Ainsi, le composé basique préféré de l'invention est l'ammoniac, avantageusement sous forme de solution aqueuse.

Les phosphates mixtes de Lanthane, Cérium et Terbium de l'invention ont une propriété de luminescence après avoir subi un traitement thermique, généralement supérieur à 500°C et avantageusement compris entre 700°C et 1000°C.

Toutefois, ces propriétés de luminescence peuvent être encore améliorées par un traitement thermique avec des "flux", ces traitements étant classiquement utilisés dans les procédés d'élaboration des luminophores.

Ils permettent, entre autre, une adaptation du luminophore à l'utilisation souhaitée.

Ces luminophores, à base de phosphates de LaCeTb sont notamment utilisés dans le domaine des lampes.

D'autres détails et avantages de l'invention apparaîtront plus clairement au vu des exemples ci-dessous donnés uniquement à titre indicatif.

### Exemple 1

Dans une solution de phosphate monoammonique portée à 80°C est ajoutée une solution de nitrate de terres rares contenant en concentration globale de terres rares 0,2 mole/l se décomposant en : 0,112 mole/l de La (NO₃)₃, 0,062 mole/l de Ce (NO₃)₃ et 0,026 mole/l de Tb (NO₃)₃.
Le rapport molaire PO₄^{≡}/TR est de 1,5. Le pH au cours de la précipitation est régulé à 2 par addition d'ammoniaque.

Le milieu réactionnel subit un mûrissement de 4 heures à 80°C.

Le précipité est ensuite récupéré par filtration et lavage à l'eau.

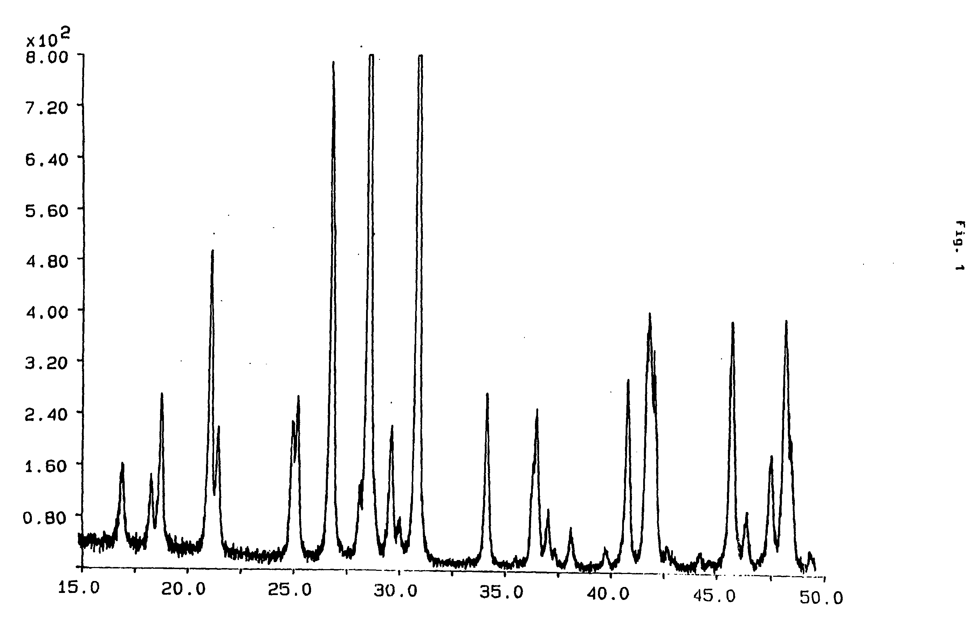

Le produit récupéré est une poudre blanche dont les caractéristiques sont les suivantes (après séchage à 110°C) :
- spectre X (voir figure 1)
- surface spécifique : 65 m²/g mesurée à 200°C.
- teneur en ions NH₄⁺ : 1 % poids

Le produit a comme formule La_{0,56} Ce_{0,31} Tb_{0,13} PO₄

Cette poudre est soumise à un traitement thermique à 900°C sous air. L'analyse aux rayons X montre que le produit est un orthophosphate de LaCeTb de structure cristalline monoclinique. Ce produit est constitué d'agrégats compacts d'environ 250 nm formés par l'agrégation de cristallites élémentaires de taille comprise entre 20 et 150 nm.

### Exemple 2

A une solution aqueuse contenant 0,50 mole/l de nitrates de terres rares, on ajoute une solution de phosphate diammonique pour obtenir un rapport molaire PO₄^{≡}/TR égal à 1,5. Cette réaction est réalisée à 25°C. Le pH du milieu de précipitation est régulé à 8,4 par addition d'ammoniaque.

Après récupération du précipité, lavage et séchage, le produit obtenu présente des caractéristiques physico-chimiques semblables à celles décrites dans l'exemple 1. Le produit calciné à 900°C sous air est évalué en luminescence.

### Exemple 3

Cet exemple est identique à celui décrit dans l'exemple 1, mais la solution de nitrates terres rares a une concentration de 2 mole/l.

La morphologie du produit obtenu est analogue à celle de l'essai 1 avec des tailles de cristallites comprises entre 80 et 200 nm.

### Test de luminescence

Les phosphates de LaCeTb obtenus selon le procédé de l'invention sont analysés pour déterminer leur propriété de luminescence.

La luminescence est déterminée au moyen d'un spectomètre "BENTHAM"® permettant d'obtenir un spectre d'émission de l'échantillon excité avec une lampe à vapeur de mercure basse pression, sous une longueur d'onde de 254 nm. Le calcul de l'intégrale des intensités d'émission entre deux longueurs d'ondes est appelée "Brillance".

Ces deux longueurs d'ondes sont 540 et 560 nm.

Les résultats obtenus, après traitement thermique des phosphates de LaCeTb des exemples 1 à 3 à une température de 900°C pendant 8 heures sont rassemblés dans le tableau ci-dessous.

| ESSAI | 1 | 2 | 3 |
|---|---|---|---|
| Brillance ( ua ) | 111 | 122 | 147 |

### Test de colorimétrie

Le phosphate de LaCeTb de l'exemple 1 après calcination à 700°C pendant 8 heures est testé dans le colorimétre décrit ci-dessus selon la procédure indiquée dans la norme française AFNOR n° X08-012 de 1983.

Les coordonnées L*, a*, b* du système CIE ( L*, a*, b* ) sont déterminées et ont les valeurs suivantes :
L* = 99,0
a* = - 0,1
b* = - 0,1

Pour le même produit calciné à 900°C pendant 8 heures,les résultats sont les suivants :
L* = 99,4
a* = - 0,1
b* = + 0,4

## Revendications

1. Phosphate mixte de lanthane, cérium et terbium de formule générale (I):
LaₓCe_{y}Tb_{(1-x-y)}PO₄
dans laquelle x est compris entre 0,4 et 0,6 et x + y est supérieur à 0,8, **caractérisé en ce que**, après calcination à une température comprise entre 700°C et 900°C pendant 8 heures sous air, il présente des coordonnées L* supérieures à 98 et des coordonnées a* et b* comprises entre - 0,5 et 0,5 dans le système CIE 1976 (L*, a*, b*) selon la norme AFNOR X08-012.

2. Phosphate selon la revendication 1, **caractérisé en ce que** la coordonnée L* est comprise entre 99 et 99,9.

3. Phosphate selon la revendication 1 ou 2, **caractérisé en ce que** les coordonnées a* et b* sont comprises entre - 0,25 et 0,5.

4. Phosphate selon l'une des revendications précédentes, **caractérisé en ce qu'**il contient au plus 5% en poids de groupements ammonium avant calcination à une température supérieure à 500°C.

5. Procédé de fabrication d'un phosphate mixte de lanthane, cérium et terbium, selon l'une des revendications 1 à 4, **caractérisé en ce qu'**il consiste à mélanger une solution de sels solubles de lanthane, cérium et terbium avec des ions phosphates avec contrôle du pH du milieu de précipitation à une valeur supérieure ou égale à 2, et comprise entre 2 et 6, à maintenir le précipité dans le milieu de précipitation pendant une durée comprise entre 15 minutes et 10 heures après la fin du mélange, puis à filtrer et laver le précipité et éventuellement le sécher, le contrôle du pH du milieu de précipitation étant réalisé par addition d'un composé basique, le composé basique et la solution de sels solubles de terres rares étant ajoutés simultanément dans la solution contenant des ions phosphates.

6. Procédé de fabrication d'un phosphate mixte de lanthane, cérium et terbium, selon l'une des revendications 1 à 4, **caractérisé en ce qu'**il consiste à mélanger une solution de sels solubles de lanthane, cérium et terbium avec des ions phosphates, avec contrôle du pH du milieu de précipitation à une valeur supérieure à 6, le contrôle du pH du milieu de précipitation étant réalisé par addition d'un composé basique, les ions phosphates et le composé basique étant ajoutés simultanément dans la solution de sels solubles de terres rares.

7. Procédé selon l'une des revendications 5 ou 6, **caractérisé en ce que** les ions phosphates sont sous forme d'une solution de phosphate d'ammonium.

8. Procédé selon la revendication 7, **caractérisé en ce que** le phosphate d'ammonium est le phosphate diammonique ou phosphate monoammonique.

9. Procédé selon l'une des revendications 5 ou 6, **caractérisé en ce que** les ions phosphates sont sous forme d'acide phosphorique.

10. Procédé selon l'une des revendications 5 à 9, **caractérisé en ce que** le composé basique est un hydroxyde d'ammonium.

11. Procédé selon l'une des revendications 5 à 10, **caractérisé en ce que** la concentration en terres rares, exprimée en oxyde de terres rares dans la solution est comprise entre 0,01 mole/l et 2 moles/l.

12. Procédé selon l'une revendications 5 à 11, **caractérisé en ce que** le sel soluble de terres rares est un nitrate, chlorure, acétate, carboxylate de terres rares.

13. Luminophore, **caractérisé en ce qu'**il consiste en un phosphate mixte de lanthane, cérium et terbium de formule générale :
LaₓCe_{y}Tb_{(1-x-y)}PO₄
dans laquelle x est compris entre 0,4 et 0,6 et x + y est supérieur à 0,8 et **en ce que** maintenu entre 700°C et 900°C pendant 8 heures sous air, il présente des coordonnées L* supérieures à 98 et des coordonnées a* et b* comprises entre - 0,5 et 0,5 dans le système CIE 1976 (L*,a*,b*) selon la norme AFNOR X08-012.

14. Luminophore, **caractérisé en ce qu'**il est obtenu par calcination à une température supérieure à 500°C d'un phosphate mixte selon l'une des revendications 1 à 4.

15. Procédé de préparation d'un luminophore selon l'une des revendications 13 ou 14, **caractérisé en ce qu'**on prépare un précipité selon le procédé de l'une des revendications 5 à 12, et **en ce que** le précipité récupéré est calciné à une température supérieure à 500°C.

## Patentansprüche

1. Gemischtes Lanthan-, Cer- und Terbiumphosphat der allgemeinen Formel (I):
Laₓ Ce_{y} Tb_{(1-x-y)} PO₄
worin x einen Wert zwischen 0,4 und 0,6 besitzt und x + y größer als 0,8 ist, **dadurch gekennzeichnet, dass** nach Calcinierung bei einer Temperatur zwischen 700°C und 900°C während 8 Stunden unter Luft es L*-Koordinaten von größer als 98 und a*- und b*-Koordinaten zwischen -0,5 und 0,5 im CIE 1976-System (L*, a*, b*) gemäß der AFNOR X08-012-Norm besitzt.

2. Phosphat nach Anspruch 1, **dadurch gekennzeichnet, dass** die L*-Koordinate zwischen 99 und 99,9 liegt.

3. Phosphat nach Anspruch 1 oder 2, **dadurch gekennzeichnet, dass** die a*- und b*-Koordinaten zwischen -0,25 und 0,5 liegen.

4. Phosphat nach einem der vorstehenden Ansprüche, **dadurch gekennzeichnet, dass** es höchstens 5 Gew.-% Ammoniumgruppen vor der Calcinierung bei einer Temperatur über 500°C enthält.

5. Verfahren zur Herstellung eines gemischten Lanthan-, Cerund Terbiumphosphats nach einem der Ansprüche 1 bis 4, **dadurch gekennzeichnet, dass** man eine Lösung löslicher Lanthan-, Cer- und Terbiumsalze mit Phosphationen unter Kontrolle des pH-Werts des Fällungsmediums auf einen Wert von größer oder gleich 2 und zwischen 2 und 6 vermischt, das Präzipitat in dem Fällungsmedium für eine Zeitdauer von 15 Minuten bis 10 Stunden nach dem Ende des Vermischens hält, dann das Präzipitat filtriert und wäscht und ggf, trocknet, wobei die Kontrolle des pH-Werts des Fällungsmediums durch Zugabe einer basischen Verbindung durchgeführt wird, wobei die basische Verbindung und die Lösung der löslichen Salze der seltenen Erden der Lösung, die die Phosphationen enthält, gleichzeitig zugesetzt werden.

6. Verfahren zur Herstellung eines gemischten Lanthan-, Cer- und Terbiumphosphats nach einem der Ansprüche 1 bis 4, **dadurch gekennzeichnet, dass** man eine Lösung löslicher Lanthan-, Cer- und Terbiumsalze mit Phosphationen unter Kontrolle des pH-Werts des Fällungsmediums auf einen Wert über 6 vermischt, wobei die Kontrolle des pH-Werts des Fällungsmediums durch Zugabe einer basischen Verbindung durchgeführt wird, wobei die Phosphationen und die basische Verbindung der Lösung der löslichen Salze der seltenen Erden gleichzeitig zugesetzt werden.

7. Verfahren nach einem der Ansprüche 5 oder 6, **dadurch gekennzeichnet, dass** die Phosphationen in Form einer Ammoniumphosphatlösung vorliegen.

8. Verfahren nach Anspruch 7, **dadurch gekennzeichnet, dass** das Ammoniumphosphat Diammoniumphosphat oder Monoammoniumphosphat ist.

9. Verfahren nach einem der Ansprüche 5 oder 6, **dadurch gekennzeichnet, dass** die Phosphationen in Form von Phosphorsäure vorliegen.

10. Verfahren nach einem der Ansprüche 5 bis 9, **dadurch gekennzeichnet, dass** die basische Verbindung ein Ammoniumhydroxid ist.

11. Verfahren nach einem der Ansprüche 5 bis 10, **dadurch gekennzeichnet, dass** die Konzentration an seltenen Erden, ausgedrückt als Oxid der seltenen Erden, in der Lösung zwischen 0,01 mol/1 und 2 mol/l beträgt.

12. Verfahren nach einem der Ansprüche 5 bis 11, **dadurch gekennzeichnet, dass** das lösliche Salz der seltenen Erden ein Nitrat, Chlorid, Acetat, Carboxylat der seltenen Erden ist.

13. Luminophor, **dadurch gekennzeichnet, dass** er aus einem gemischten Lanthan-, Cer- und Terbiumphosphat der allgemeinen Formel (I):
Laₓ Ce_{y} Tb_{(1-x-y)} PO₄
besteht, worin x einen Wert zwischen 0,4 und 0,6 besitzt und x + y größer als 0,8 ist, und dass er nach 8-stündigem Halten zwischen 700°C und 900°C unter Luft L*-Koordinaten von größer als 98 und a*- und b*-Koordinaten zwischen -0,5 und 0,5 im CIE 1976-System (L*, a*, b*) gemäß der AFNOR X08-012-Norm besitzt.

14. Luminophor, **dadurch gekennzeichnet, dass** er durch Calcinierung bei einer Temperatur über 500°C eines gemischten Phosphats nach einem der Ansprüche 1 bis 4 erhalten worden ist.

15. Verfahren zur Herstellung eines Luminophors nach einem der Ansprüche 13 oder 14, **dadurch gekennzeichnet, dass** man ein Präzipitat nach dem Verfahren gemäß einem der Ansprüche 5 bis 12 herstellt und das so erhaltene Präzipitat bei einer Temperatur über 500°C calciniert.

## Claims

1. Phosphate mixed with lanthanum, cerium and terbium of general formula (I):
LaₓCe_{y}Tb_{(1-x-y)}PO₄
in which x is in the range of 0.4 and 0.6 and x + y is greater than 0.8, **characterized in that**, after calcination at a temperature in the range of 700°C and 900°C for 8 hours under air, it has coordinates L* greater than 98 and coordinates a* and b* in the range of -0.5 and 0.5 in the system CIE 1976 (L*, a*, b*) according to the AFNOR standard X08-012.

2. Phosphate according to claim 1, **characterized in that** the coordinate L* is in the range of 99 and 99.9.

3. Phosphate according to claim 1 or 2, **characterized in that** the coordinates a* and b* are in the range of -0.25 and 0.5.

4. Phosphate according to one of the preceding claims, **characterized in that** it contains at most 5% by weight of ammonium groups before calcination at a temperature greater than 500°C.

5. Process for the production of a phosphate mixed with lanthanum, cerium and terbium, according to any one of claims 1 to 4, **characterized in that** it consists of mixing a solution of soluble salts of lanthanum, cerium and terbium with phosphate ions with control of the pH of the precipitation medium at a value greater than or equal to 2, and in the range of 2 and 6, keeping the precipitate in the precipitation medium for a period in the range of 15 minutes and 10 hours after the mixing is finished, then filtering and washing the precipitate and optionally drying it, the pH of the precipitation medium being controlled by the addition of a basic compound, the basic compound and the solution of soluble rare earth salts being added simultaneously to the solution containing the phosphate ions.

6. Process for the production of a phosphate mixed with lanthanum, cerium and terbium, according to any one of claims 1 to 4, **characterized in that** it consists of mixing a solution of soluble salts of lanthanum, cerium and terbium with phosphate ions with control of the pH of the precipitation medium at a value greater than 6, the pH of the precipitation medium being controlled by the addition of a basic compound, the phosphate ions and the basic compound being added simultaneously to the solution of soluble rare earth salts.

7. Process according to any one of claims 5 or 6, **characterized in that** the phosphate ions are in the form of an ammonium phosphate solution.

8. Process according to claim 7, **characterized in that** the ammonium phosphate is diammonium phosphate or monoammonium phosphate.

9. Process according to any one of claims 5 or 6, **characterized in that** the phosphate ions are in the form of phosphoric acid.

10. Process according to any one of claims 5 to 9, **characterized in that** the basic compound is an ammonium hydroxide.

11. Process according to any one of claims 5 to 10, **characterized in that** the concentration of rare earths, expressed as rare earth oxide, in the solution is in the range of 0.01 mole/l and 2 moles/l.

12. Process according to any one of claims 5 to 11, **characterized in that** the soluble rare earth salt is a rare earth nitrate, chloride, acetate, carboxylate.

13. Luminophore, **characterized in that** it consists of a phosphate mixed with lanthanum, cerium and terbium of the general formula:
LaₓCe_{y}Tb_{(1-x-y)}PO₄
in which x is in the range of 0.4 and 0.6 and x+y is greater than 0.8 and **in that**, kept between 700°C and 900°C for 8 hours under air, it has coordinates L* greater than 98 and coordinates a* and b* in the range of -0.5 and 0.5 in the system CIE 1976 (L*, a*, b*) according to the AFNOR standard X08-012.

14. Luminophore, **characterized in that** it is obtained by calcination at a temperature greater than 500°C of a phosphate mixed according to any one of claims 1 to 4.

15. Process for the preparation of a luminophore according to any one of claims 13 or 14, **characterized in that** a precipitate is prepared according to the process of any one of claims 5 to 12, and **in that** the precipitate recovered is calcinated at a temperature greater than 500°C.
